# EUROPÄISCHE PATENTSCHRIFT

(11) **EP 3 265 015 B1**
(45) Veröffentlichungstag und Bekanntmachung des Hinweises auf die Patenterteilung: **11.09.2024**
(21) Anmeldenummer: 16708128.0
(22) Anmeldetag: 03.03.2016
(51) Int. Cl.: A61C 3/025

(54) **PULVERSTRAHLGERÄT**
POWDER BLAST APPARATUS
DISPOSITIF À JET DE POUDRE

(30) Priorität: 06.03.2015 DE 102015103291
(43) Veröffentlichungstag der Anmeldung: 10.01.2018
(73) Patentinhaber: Ferton Holding S.A., 2800 Delémont (CH)
(72) Erfinder: LEBRETON, Etienne, 1023 Crissier (CH); LIMON, Martin, 01250 Rignat (FR); BEANI, Florent Jean-Claude Georges, 01170 Gex (FR); FRIDEZ, Pierre, 1055 Froideville (CH); DONNET, Marcel, 01630 Saint Jean de Gonville (CH)
(74) Vertreter: Müller Schupfner & Partner Patent- und Rechtsanwaltspartnerschaft mbB (Muc)
(86) Internationale Anmeldenummer: PCT/EP2016/054563
(87) Internationale Veröffentlichungsnummer: WO 2016/142272

(56) Entgegenhaltungen:
- EP-A1- 1 972 295
- WO-A1-98/53954
- US-A- 2 661 537
- US-A1- 2004 197 731
- US-A1- 2004 197 731

## Beschreibung

Die Erfindung betrifft ein Pulverstrahlgerät zur Reinigung von Zahnoberflächen durch Beaufschlagung mittels eines Pulver-Gas-Gemisches und eine Verbindungseinheit für ein Pulverstrahlgerät.

Pulverstrahlgeräte (dentale Abrasivstrahlgeräte) zum Reinigen, insbesondere zum Pulverstrahlen oder Polieren, von Zahnoberflächen mittels eines abrasiven Zahnreinigungspulvers (Dentalpulvers) sind im Stand der Technik bekannt. Zur Reinigung von Zahnoberflächen wird hierbei das Zahnreinigungspulver mittels eines gasförmigen Trägermediums, meist Luft, auf die Zahnoberfläche gestrahlt. Zusätzlich wird in der Regel ein flüssiges Medium, in der Regel Wasser, über eine separate Leitung in den Mund des Patienten geleitet. Die Flüssigkeit erfüllt dabei den Zweck, ein unkontrolliertes Versprühen des Pulvers während der Zahnbehandlung zu verhindern sowie die abgetragenen Schmutzpartikel einschließlich der im Mund des Patienten verbleibenden Pulverteilchen abzuschwemmen.

Ein Pulverstrahlgerät der oben genannten Art ist beispielsweise in der EP 0 097 288 B1 beschrieben. Dieses Pulverstrahlgerät umfasst eine kastenförmige Basisstation (stationäre Einheit) mit einem Gehäuse, in dem ein Pulverbehälter, der ein Dentalpulver bevorratet, angeordnet ist. Durch Einleiten von Druckluft wird das Dentalpulver aufgewirbelt und über eine Auslassöffnung in eine Schlauchleitung innerhalb des Gehäuses der Basisstation geleitet. Ein Quetschventil in der Schlauchleitung dient der Unterbrechung des Pulver-Gas-Stroms. Das Quetschventil wird mittels Druckluft betrieben, die von einer Druckluftleitung vor dem Pulverbehälter abgezweigt wird. Ein Handstück ist über einen Verbindungsschlauch, welcher zwei separate Leitungen für das Pulver-Gas-Gemisch und Wasser enthält, mit der Basisstation verbunden.

Ein weiteres Pulverstrahlgerät ist in der EP 1 972 295 B1 beschrieben. Dieses Pulverstrahlgerät umfasst eine Basisstation (stationäre Einheit) mit einem Aufnahmebereich für einen auswechselbaren Pulverbehälter, der eine Wirbelkammer zur Herstellung eines Pulver-Gas-Gemisches aufweist. Ein Handstück ist über eine Anschlussleitung mit der Basisstation verbunden. Die Basisstation enthält ein Bedienfeld zur Einstellung von Betriebsparametern, beispielsweise der Stärke des Pulverstrahls oder eines Wasserstrahls.

Aus der US 2 661 537 A ist ein Pulverstrahlgerät mit einem Handteil bekannt, wobei zwischen Pulverstrahlgerät und Handteil ein verformbarer Leitungsabschnitt vorgesehen ist, über den das Pulverstrahlgerät mit dem Handteil verbunden ist.

Aus der US 2004 197 731 ist ein dentales Abrasivsystem bekannt, das unter Druck stehendes Heliumgas verwendet. Das System umfasst eine Vorrichtung zum Abschleifen von Zähnen unter Verwendung eines Schleifmittels mit einer unter Druck stehenden Heliumgasquelle und einer Steuerung zur Regelung von unter Druck stehendem Heliumgas, um ein Heliumgas enthaltendes Trägergas zu bilden, das das Schleifmittel zu den Zähnen transportiert.

Für eine optimale Handhabung eines Pulverstrahlgeräts ist es wünschenswert, dass die Behandlung mit einer minimalen Verzögerung gestartet und beendet werden kann. Bekannte Pulverstrahlgeräte verwenden zum Unterbrechen des Pulver-Gas-Stroms ein Quetschventil, wie beispielsweise in der EP 0 097 288 beschrieben, welches in der stationären Einheit angeordnet ist, nämlich zwischen dem Pulverbehälter und dem Anschluss der zu dem Handstück führenden Verbindungsleitung. Das Quetschventil kann beispielsweise durch ein Magnetventil oder durch einen Pneumatikzylinder betätigt werden. Bei einem Quetschventil wird ein elastisches Schlauchstück gequetscht und dadurch verschlossen, so dass der Strom des Pulver-Gas-Gemisches gesperrt wird. Gegenüber anderen Ventilarten hat das Quetschventil den Vorteil, dass Totzonen, die bei einem Pulverstrom ungünstig sind, vermieden werden und dass die Flüssigkeit bzw. das Pulver-Gas-Gemisch antiseptisch geregelt werden kann, d.h. nicht mit Ventilen oder dgl. in Berührung kommt.

Nachteilig bei Quetschventilen ist jedoch die Tatsache, dass aufgrund der abrasiven Wirkung des Dentalpulvers und der wiederholten mechanischen Quetschung des Schlauchs eine Abnutzung entsteht, die zu einem Versagen des Quetschventils führen kann. Dies führt dann zu einem Austritt von Pulver in das Gehäuse der stationären Einheit.

Es wurde daher vorgeschlagen, auf Quetschventile in der Pulverleitung (Leitung für das Pulver-Gas-Gemisch) zu verzichten. Stattdessen wurde vorgeschlagen, zur Beendigung der Zahnbehandlung die Zufuhr von Druckluft in die Pulverkammer zu unterbrechen. Dies kann mit konventionellen Absperrventilen erfolgen. Hierbei ist jedoch nachteilig, dass die Behandlung nicht unmittelbar gestoppt wird, da der Druck in der Pulverkammer zunächst abgebaut werden muss, was einige Sekunden in Anspruch nehmen kann. Gleiches gilt für den Beginn einer Behandlung, wo bei diesem Vorgehen zunächst Druck in der Pulverkammer aufgebaut werden muss.

Der Erfindung liegt die Aufgabe zugrunde, ein Pulverstrahlgerät und Komponenten eines Pulverstrahlgeräts anzugeben, so dass das Pulverstrahlgerät bei einer möglichst komfortablen Handhabung besonders zuverlässig und langlebig ist.

Die Aufgabe wird erfindungsgemäß gelöst durch ein Pulverstrahlgerät mit den Merkmalen des Anspruchs 1 sowie durch eine Verbindungseinheit mit den Merkmalen des Anspruchs 11. Bevorzugte Ausgestaltungen der Erfindung sind in den abhängigen Ansprüchen sowie der nachfolgenden Beschreibung, insbesondere im Zusammenhang mit den beiliegenden Figuren, angegeben und weiter erläutert.

Das erfindungsgemäße Pulverstrahlgerät zur Reinigung von Zahnoberflächen durch Beaufschlagung mittels eines Pulver-Gas-Gemisches umfasst eine stationäre Einheit (Basisstation) mit einem Anschlussbereich für eine Mischkammer zum Herstellen des Pulver-Gas-Gemisches, ein Handstück mit einer Düseneinrichtung zum Strahlen des Pulver-Gas-Gemisches auf eine Zahnoberfläche und eine Verbindungseinheit zum Verbinden des Handstückes mit der stationären Einheit. Die Verbindungseinheit weist mindestens eine Verbindungsführung zwischen der stationären Einheit und dem Handstück auf. In einer Pulver-Gas-Leitung zwischen der Mischkammer und der Düseneinrichtung ist ein durch elastische Verformung absperrbarer Schlauchabschnitt angeordnet. Die Erfindung ist dadurch gekennzeichnet, dass die Verbindungseinheit lösbar mit der stationären Einheit verbunden ist und dass der absperrbare Schlauchabschnitt in der lösbaren bzw. abkoppelbaren Verbindungseinheit angeordnet ist.

Die erfindungsgemäße Verbindungseinheit für ein Pulverstrahlgerät zur Reinigung von Zahnoberflächen durch Beaufschlagung mittels eines Pulver-Gas-Gemisches ist zum Verbinden eines Handstückes des Pulverstrahlgeräts mit einer stationären Einheit (Basisstation) des Pulverstrahlgeräts ausgebildet und weist eine Verbindungsführung zur Anordnung zwischen der stationären Einheit und dem Handstück auf. Es ist vorgesehen, dass die Verbindungseinheit einen Anschlussbereich, oder Kupplungsbereich, zum lösbaren Verbinden mit der stationären Einheit aufweist und dass die Verbindungseinheit eine Pulver-Gas-Leitung zur Führung eines Pulver-Gas-Gemisches mit einem durch elastische Verformung absperrbaren Schlauchabschnitt (Leitungsabschnitt) aufweist. Zusätzlich oder alternativ kann die Verbindungseinheit auch eine beispielsweise durch elastische Verformung absperrbare Flüssigkeitsleitung aufweisen.

Ein erster Grundgedanke der Erfindung kann darin gesehen werden, dass die Verbindungseinheit lösbar (trennbar, abnehmbar) mit der stationären Einheit verbunden oder verbindbar ist. Auf diese Weise wird erreicht, dass bei einem Defekt des Quetschventils, insbesondere des absperrbaren Schlauchabschnitts, keine aufwändige Reparatur der stationären Einheit erforderlich ist, sondern lediglich die Verbindungseinheit ausgetauscht werden kann. Die Behebung des Defekts kann daher erheblich schneller und kostengünstiger durchgeführt werden. Zudem verhindert die Anordnung des absperrbaren Schlauchabschnitts außerhalb der stationären Einheit, dass bei einem defekten (undichten) Schlauchabschnitt Pulver in das Innere der stationären Einheit gelangt, in welchem üblicherweise elektronische Komponenten, insbesondere Steuerelemente, angeordnet sind. Schließlich kann ein Anwender den Defekt leichter erkennen, da Pulver bei einer Undichtigkeit des Quetschventils (des absperrbaren Schlauchabschnitts) für den Anwender sichtbar aus der Verbindungseinheit austritt und in die Umgebung gelangt.

Ein zweiter Grundgedanke der Erfindung kann darin gesehen werden, ein Quetschventil zumindest teilweise in die Verbindungseinheit zu integrieren. Ein Quetschventil weist als eine Komponente einen absperrbaren (verschließbaren), elastischen Schlauchabschnitt (Leitungsabschnitt) auf. Jedenfalls diese Komponente des Quetschventils ist erfindungsgemäß nicht in der stationären Einheit, sondern in der Verbindungseinheit zwischen der stationären Einheit und dem Handstück angeordnet. Eine weitere Komponente eines Quetschventils ist ein Mittel oder eine Vorrichtung zum, insbesondere gesteuerten, Zusammendrücken bzw. Quetschen des Schlauchabschnitts, welches vorzugsweise ebenfalls in der Verbindungseinheit angeordnet ist, grundsätzlich aber auch in der stationären Einheit angeordnet sein kann. Ist eine Anordnung in der stationären Einheit vorgesehen, so wirken die Mittel auf den elastischen Schlauchabschnitt ein, der sich in oder an der Verbindungseinheit befindet.

Für einen kostengünstigen Austausch der Verbindungseinheit ist diese vorzugsweise nicht nur mit der stationären Einheit, sondern auch mit dem Handstück lösbar (trennbar, abnehmbar) verbunden. Die Verbindungseinheit einschließlich des absperrbaren Schlauchabschnitts des Quetschventils kann also einzeln und unter Beibehaltung sowohl der stationären Einheit als auch des Handstücks ausgewechselt werden.

Die insbesondere flexible (biegbare) Verbindungsführung der Verbindungseinheit, welche beispielsweise ein Verbindungsschlauch, Verbindungskabel oder eine sonstige Führung für eine flexible Leitung sein kann, enthält vorzugsweise eine erste Leitung (Versorgungsleitung) für das Pulver-Gas-Gemisch (Pulver-Gas-Leitung, Pulverleitung) und eine zweite Leitung (Versorgungsleitung) für eine Flüssigkeit (Flüssigkeitsleitung). Die beiden Leitungen sind an separate Düsen einer Düseneinrichtung des Handstücks angeschlossen, so dass die Flüssigkeit getrennt von dem Pulver-Gas-Strom auf die Zahnoberfläche gerichtet werden kann. Der Flüssigkeitsstrom dient in grundsätzlich bekannter Weise dem Abtransport des Pulvers nach dem Auftreffen auf die Zahnoberfläche und/oder dazu, das Versprühen des Pulvers während der Zahnbehandlung zu kontrollieren. Die Düse für den Flüssigkeitsstrahl kann die Pulver-Gas-Düse hierzu ringförmig umgeben.

Zur Aufnahme des absperrbaren Schlauchabschnitts umfasst die Verbindungseinheit vorzugsweise einen mit der Verbindungsführung verbundenen Gehäusekörper (Gehäuse). Der im Gegensatz zu der Verbindungsführung starre bzw. formstabile Gehäusekörper dient der Aufnahme des elastischen, absperrbaren Schlauchabschnitts und gegebenenfalls weiterer Komponenten des Quetschventils, beispielsweise einer Druckkammer für ein Steuerfluid, insbesondere Steuergas, und/oder eines Quetschelements zum Zusammenpressen des absperrbaren Schlauchabschnitts. Ein wesentlicher Aspekt der Erfindung ist darin zu sehen, dass die der Verbindung des Handstücks mit der stationären Einheit dienende Verbindungseinheit neben einem flexiblen (biegbaren) Verbindungselement (Verbindungskabel, Verbindungsschlauch) einen Gehäusekörper aufweist, der zum Halten und zur Aufnahme von Komponenten eines Quetschventils in Form eines absperrbaren, elastischen Schlauchabschnitts einer Pulver-Gas-Leitung, geeignet ist. Der Gehäusekörper umfasst hierzu erfindungsgemäß ein starres Gehäuse. Der elastische Schlauchabschnitt ist mittels mindestens eines starren Halteelements, insbesondere eines starren Leitungsabschnitts, in dem Gehäusekörper bzw. Gehäuse gehalten. Der elastische, absperrbare Schlauchabschnitt kann auch zwischen Halteelementen (starren Leitungsabschnitten) eingespannt sein. Vorzugsweise ist der absperrbare oder zusammendrückbare, elastische Schlauchabschnitt des Quetschventils einstückig mit einem Leitungsabschnitt der Pulver-Gas-Leitung in der zum Handstück führenden Verbindungsführung gebildet.

Zum lösbaren Verbinden der Verbindungseinheit mit der stationären Einheit ist es erfindungsgemäß vorgesehen, dass die Verbindungseinheit einen ersten Kupplungsbereich (Verbindungsbereich, Anschlussbereich) zum Ankoppeln (Anschließen) an einen korrespondierenden zweiten Kupplungsbereich (Verbindungsbereich, Anschlussbereich) der stationären Einheit aufweist. Erfindungsgemäß ist es vorgesehen, dass der erste Kupplungsbereich an dem Gehäusekörper der Verbindungseinheit vorgesehen ist, so dass der Gehäusekörper der Verbindungseinheit direkt an das Gehäuse der stationären Einheit anschließbar bzw. ankoppelbar ist. Die Verbindungseinheit umfasst also einen Gehäusekörper mit einem Kupplungsbereich zum Ankoppeln an die stationäre Einheit bzw. das Gehäuse der stationären Einheit und eine Verbindungsführung mit einer Pulver-Gas-Leitung und vorzugsweise zusätzlich einer Flüssigkeitsleitung, die an das Handstück angeschlossen ist. Die Kupplungsbereiche können gegebenenfalls an eigenständigen Kupplungsteilen der stationären Einheit und/oder der Verbindungseinheit ausgebildet sein.

Die Betätigung des Quetschventils erfolgt vorzugsweise mittels eines Steuerfluids, insbesondere einem Druckgas, vorzugsweise Druckluft. Das Steuerfluid bzw. die Druckluft wird vorzugsweise von der stationären Einheit zu der Verbindungseinheit geleitet. Hierzu ist zwischen der Verbindungseinheit und der stationären Einheit vorzugsweise eine Kupplung für ein Steuerelement zum Steuern des Quetschventils, insbesondere eine Leitungskupplung für eine Steuerfluidleitung, bevorzugt für eine Druckluftleitung, gebildet. Die Leitungskupplung umfasst vorzugsweise entsprechende Kupplungselemente an dem ersten Kupplungsbereich oder Kupplungsteil (der Verbindungseinheit) und dem zweiten Kupplungsbereich oder Kupplungsteil (der stationären Einheit). Die Verbindungseinheit umfasst vorzugsweise eine Druckgasleitung, insbesondere Druckluftleitung, welche auch als Steuerfluidleitung bezeichnet werden kann. Durch die Druckgasleitung wird ein Steuerfluid (Druckluft) zu dem Quetschventil in der Verbindungseinheit geführt, das (die) als An/Aus-Befehl bzw. Öffnungs-/Schließbefehl für das Quetschventil dient. Alternativ kann auch eine elektromechanische Betätigung des Quetschventils erfolgen.

Des Weiteren ist es bevorzugt, dass zwischen der Verbindungseinheit und der stationären Einheit eine Leitungskupplung für eine Flüssigkeitsleitung gebildet ist, um die Flüssigkeit von der stationären Einheit zur Verbindungseinheit und über diese weiter zu dem Handstück zu leiten.

Es ist außerdem erfindungsgemäß bevorzugt, dass zwischen der Verbindungseinheit und der stationären Einheit eine Leitungskupplung für eine Pulver-Gas-Leitung gebildet ist. In einer vorteilhaften Ausgestaltung ist die Mischkammer an der stationären Einheit angeordnet bzw. bildet einen Teil der stationären Einheit. Das Pulver-Gas-Gemisch verlässt die Mischkammer über eine Pulver-Gas-Leitung und gelangt über die Leitungskupplung zur abnehmbaren Verbindungseinheit, welche den verschließbaren Leitungs- bzw. Schlauchabschnitt des Quetschventils enthält.

Die Verbindungszone (Kupplungszone) zwischen stationärer Einheit und Verbindungseinheit enthält also vorzugsweise eine Flüssigverbindung (zur Reinigungsbehandlung) und erfindungsgemäß eine Pulver-Gas-Verbindung (zur Reinigungsbehandlung) und/oder eine Luftverbindung (Druckluftverbindung) zur Betätigung (Aktivierung) des Quetschventils.

Die Mischkammer kann auch zusammen mit dem absperrbaren Schlauchabschnitt (und vorzugsweise dem Handstück) eine Einheit bilden, welche auswechselbar mit der stationären Einheit gekoppelt ist. In diesem Fall, bei dem die Mischkammer als Teil der abnehmbaren Verbindungseinheit angesehen werden kann, ist zwischen der Verbindungseinheit und der stationären Einheit eine Leitungskupplung für eine Druckluftleitung zur Mischkammer gebildet. Die Druckluftleitung leitet dabei Druckluft zu der Mischkammer. Die Mischkammer kann in dem Gehäusekörper der Verbindungseinheit aufgenommen oder in den Gehäusekörper integriert oder als separates Element der Verbindungseinheit ausgebildet sein.

Die Verbindungseinheit umfasst vorzugsweise einen Steuerraum für ein druckbeaufschlagtes Steuerfluid und/oder ein Quetschelement oder Steuerelement (z.B. Zapfen, druckbeaufschlagte Kugel o.ä.) zum Absperren des Schlauchabschnitts. Der Steuerraum (Fluidraum, Hohlraum, Druckraum) bzw. das Steuerelement ist insbesondere in dem Gehäusekörper der Verbindungseinheit angeordnet. Das Steuerfluid ist insbesondere Druckluft. Der absperrbare Schlauchabschnitt, welcher ein Absperrelement des Quetschventils bildet, kann durch Druckbeaufschlagung mit dem Steuerfluid zusammengequetscht oder -gedrückt und damit verschlossen werden. Alternativ kann das Zusammenquetschen bzw. Verschließen (Absperren) des Schlauchabschnitts durch ein Quetsch- oder Steuerelement, insbesondere einen Stößel, bewirkt werden. Dieser kann wiederum mittels eines Steuerfluids, insbesondere Druckluft, betätigt werden.

In einer bevorzugten Ausgestaltung der Erfindung ist vorgesehen, dass die stationäre Einheit eine Steuereinrichtung, insbesondere ein steuerbares Ventil, insbesondere ein Magnetventil, zum Steuern des Steuerfluids, insbesondere der Druckluft, aufweist. Die stationäre Einheit enthält also eine Einrichtung zur Bereitstellung eines Druckgases, insbesondere Druckluft, zur Aktivierung der Absperrung des Schlauchabschnitts, welche als Teil (Komponente) des Quetschventils angesehen werden kann. Diese Einrichtung (Aktivierungseinrichtung) in der stationären Einheit kann insbesondere einen An-Aus-Befehl liefern, insbesondere durch Anwesenheit bzw. Abwesenheit von Druckluft (Bereitstellung oder Nichtbereitstellung von Druckluft an einem Quetschelement bzw. in einer Druckkammer des Quetschventils). Die Druckluft kann über eine Leitungskupplung (Druckgaskupplung, Steuerkupplung) von der stationären Einheit an die Verbindungseinheit übertragen werden, wo sich der absperrbare, elastische Schlauchabschnitt und gegebenenfalls das Quetschelement/Druckelement zum Quetschen (Zusammendrücken, Verschließen) des Schlauchabschnitts und/oder ein Druckraum befindet. Die Quetschfunktion bzw. die Aktivierung des Quetschventils wird also in zwei Subsysteme aufgeteilt: Der Aktivierungsbefehl wird in der stationären Einheit, beispielsweise durch ein Ventil, bereitgestellt, beispielsweise durch Bereitstellen von Druckluft. Das Verschlie-ßen des Schlauchabschnitts des Quetschventils erfolgt in der abnehmbaren Verbindungseinheit, beispielsweise durch einen Zylinder bzw. ein Druck- oder Quetschelement.

Nach einer alternativen Ausführungsform der Erfindung ist das Steuerelement in der stationären Einheit gelagert und greift zum Absperren des Schlauchabschnitts in die oder an der Verbindungseinheit ein- / bzw. an. Die Steuerung des Steuerelements (z.B. pneumatisch, elektrisch oder elektromagnetisch) erfolgt somit in der stationären Einheit, während sich der kritische Schlauchabschnitt in oder an der abnehmbaren Verbindungseinheit befindet. Das hat die zwei wesentlichen Vorteile, dass die Verbindungseinheit kostengünstiger hergestellt werden kann, da sich in dieser weniger Teile befinden, und gleichzeitig der weitere Anschluss für die Steuerung des Steuerelements (z.B. die pneumatische Steuerleitung) wegfällt.

Die Verbindungseinheit umfasst vorzugsweise eine Riegeleinrichtung / einen Riegelmechanismus zum formschlüssigen und/oder kraftschlüssigen Verbinden bzw. mechanischen Verriegeln mit der stationären Einheit. Die Riegeleinrichtung kann beispielsweise finger- oder hakenförmige Riegelelemente aufweisen. Beispielsweise kann die Verbindungseinheit mit der stationären Einheit verrastbar sein, insbesondere derart, dass ein erneutes Lösen der Verbindung nur durch Betätigen einer Entriegelungseinrichtung erfolgen kann.

Vorzugsweise ist eine Entriegelungseinrichtung zum gezielten Entriegeln der Verbindung zwischen Verbindungseinheit und stationärer Einheit vorhanden. Die Verbindungseinheit und die stationäre Einheit sind vorzugsweise in einem Kopplungszustand derart miteinander (fest) gekoppelt / verbunden, dass die Kopplung / Verbindung (ausschließlich) durch Betätigen der Entriegelungseinrichtung lösbar ist. Es ist also sichergestellt, dass die Verbindungseinheit und die stationäre Einheit nicht voneinander getrennt werden können, ohne die Entriegelungseinrichtung zu betätigen. Hiermit wird eine sichere Verbindung hergestellt.

Nach einer weiteren alternativen Ausführungsform der Erfindung weist die stationäre Einheit neben dem Anschlussbereich für die Mischkammer zum Herstellen des Pulver-Gas-Gemisches, dem Handstück mit einer Düseneinrichtung zum Strahlen des Pulver-Gas-Gemisches auf eine Zahnoberfläche und der Verbindungseinheit zum Verbinden des Handstückes mit der stationären Einheit mindestens eine Verbindungsführung zwischen der stationären Einheit und dem Handstück auf, sowie die Pulver-Gas-Leitung zwischen der Mischkammer und der Düseneinrichtung, mit dem durch elastische Verformung absperrbaren Schlauchabschnitt, wobei die Verbindungseinheit lösbar mit der stationären Einheit verbunden ist und wobei Mittel zur Regulierung eines Flüssigkeitsdurchflusses in der lösbaren Verbindungseinheit angeordnet sind. Diese Mittel können zusätzlich oder alternativ zu dem durch elastische Verformung absperrbaren Schlauchabschnitt der Pulver-Gas-Leitung in der Verbindungseinheit angeordnet sein.

Die Mittel zur Regulierung des Flüssigkeitsdurchflusses umfassen nach einer Alternative der Erfindung mindestens ein elektrisches oder pneumatisches Ventil, das in der lösbaren Verbindungseinheit angeordnet ist.

In gleicher Weise wie bei dem durch elastische Verformung absperrbaren Schlauchabschnitt für das Pulver-Gas-Gemisch kann eine gleichartige Leitung für die Flüssigkeitszufuhr und deren Regelung bzw.- Steuerung vorgesehen sein, wodurch auch Lecks bei dieser Leitung nicht die stationäre Einheit sondern allenfalls die Verbindungseinheit beschädigen würden. Wie zuvor beschrieben, kann sich in der Verbindungseinheit lediglich der für die Flüssigkeitszufuhr notwendige absperrbaren Schlauchabschnitt befinden, während die Steuermittel in der stationären Einheit gelagert sind, oder beides befindet sich in der Verbindungseinheit, wobei dann wieder entsprechende Kupplungen für die Steuerung (z.B. elektrischer oder pneumatischer Anschluss) notwendig sind.

Sind die Steuermittel in der stationären Einheit gelagert, so wird nach einer Alternative der Erfindung das pneumatische Ventil über einen Steuerzapfen gesteuert, der in der stationären Einheit gelagert ist. Dieser ragt jedenfalls so weit in oder an die Verbindungseinheit, dass dort der durch elastische Verformung absperrbare Schlauchabschnitt mittels des Steuerzapfens abgesperrt wird.

Die Erfindung wird nachfolgend anhand bevorzugter Ausführungsbeispiele, welche in den beiliegenden, schematischen Figuren dargestellt sind, weiter beschrieben. In den Figuren zeigt:
- Fig. 1:: eine beispielhafte Ausführungsform eines erfindungsgemäßen Pulverstrahlgeräts;
- Fig. 2:: eine beispielhafte Ausführungsform einer erfindungsgemäßen Verbindungseinheit in einer perspektivischen Ansicht;
- Fig. 3:: die Verbindungseinheit gemäß Fig. 2 in einer Draufsicht;
- Fig. 4:: die Verbindungseinheit gemäß Fig. 2 in einer Schnittansicht;
- Fig. 5:: die Verbindungseinheit gemäß Fig. 4 zusammen mit einem Kupplungsteil einer stationären Einheit in einem entkoppelten Zustand;
- Fig. 6:: die Anordnung gemäß Fig. 5 in einem gekoppelten Zustand;
- Fig. 7:: eine perspektivische Ansicht der Einheit gemäß Fig. 6 einschließlich eines Handstücks; und
- Fig. 8:: eine schematische Darstellung von Komponenten eines erfindungsgemäßen Pulverstrahlgeräts.

Gleiche oder gleich wirkende Elemente sind in sämtlichen Figuren mit denselben Bezugszeichen gekennzeichnet.

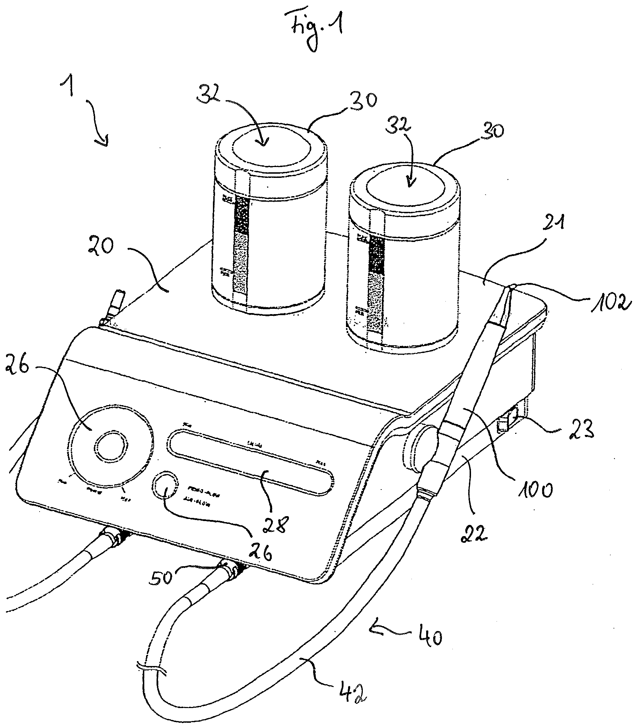

Fig. 1 zeigt den grundsätzlichen Aufbau eines Pulverstrahlgeräts 10 gemäß der Erfindung. Das Pulverstrahlgerät 10 umfasst eine stationäre Einheit 20, welche auch als Basiseinheit bezeichnet werden kann. Die stationäre Einheit 20 umfasst ein Gehäuse 21 mit einem Sockelbereich 22 zum Aufsetzen auf eine Oberfläche, beispielsweise einen Tisch. In dem Gehäuse 21 sind Steuerelemente zum Steuern des Betriebs des Pulverstrahlgeräts 10, insbesondere elektronische Komponenten, untergebracht. Die stationäre Einheit 20 verfügt über Mittel zum Bereitstellen von Druckgas, insbesondere Druckluft, an einer Mischkammer 32, in welcher mittels des Druckgases bzw. der Druckluft ein Pulver-Gas-Gemisch bzw. ein Pulver-Luft-Gemisch hergestellt wird. Des Weiteren kann die stationäre Einheit 20 einen Ein-Aus-Schalter 23 aufweisen, wie in der Fig. 1 dargestellt. Schließlich kann an der stationären Einheit 20 ein Bedienfeld oder eine Eingabeeinrichtung 26 zum Eingeben von Befehlen und/oder eine Anzeigeeinrichtung 28 zum Anzeigen von Statusinformationen vorhanden sein. Die stationäre Einheit 20 verfügt über einen Anschlussbereich zum Anschließen eines Pulverbehälters 30, in welchem ein Dentalpulver zum Reinigen von Zahnoberflächen aufgenommen ist. Der Pulverbehälter 30, welcher als Teil der stationären Einheit 20 oder als separates Element angesehen werden kann, umfasst eine Mischkammer 32, insbesondere in einem Behältergehäuse des Pulverbehälters 30. In der Mischkammer 32 wird das Pulver (Dentalpulver) mit der Druckluft verwirbelt und an einer Austrittsöffnung der Mischkammer 32 ein Pulver-Gas-Gemisch bzw. Pulver-Luft-Gemisch bereitgestellt. Eine Pulver-Gas-Leitung 44 führt von der Mischkammer 32 über eine Verbindungseinheit 40, welche nachfolgend näher beschrieben wird, zu einem Handstück 100, welches bei einer Anwendung im Mund eines Patienten angeordnet wird.

Die Verbindungseinheit 40, welche auch als Schlaucheinheit oder Kabeleinheit bezeichnet werden kann, umfasst in bekannter Weise eine flexible Verbindungsführung 42, beispielsweise ein (flexibles) Verbindungskabel oder einen (flexiblen) Verbindungsschlauch, zwischen der stationären Einheit 20 und dem Handstück 100. In der Verbindungsführung 42 verläuft die Pulver-Gas-Leitung 44 (bzw. ein Abschnitt hiervon) sowie eine Flüssigkeitsleitung 46, mit welcher eine Flüssigkeit, üblicherweise Wasser, zu dem Handstück 100 transportiert wird. Das Handstück 100 umfasst eine Düseneinrichtung 102, welche separate Düsen für das Pulver-Gas-Gemisch einerseits und die Flüssigkeit andererseits aufweist. Zusätzlich zu der flexiblen Verbindungsführung 42 umfasst die Verbindungseinheit 40, welche die stationäre Einheit 20 mit dem Handstück 100 verbindet, einen Gehäusekörper 50 mit einem, beispielsweise zylinderförmigen, Gehäuse 52. In der dargestellten Ausführungsform ist der Gehäusekörper 50 bzw. das Gehäuse 52 an die stationäre Einheit 20 angekoppelt (mit dieser verbunden). Hierzu umfasst der Gehäusekörper 50 bzw. das Gehäuse 52 einen ersten Kupplungsbereich oder Anschlussbereich 64. Die stationäre Einheit 20 weist einen zweiten Kupplungsbereich oder Anschlussbereich 34 auf, der mit dem ersten Kupplungsbereich 64 koppelbar oder verbindbar ist. Der zweite Kupplungsbereich 34 ist hierbei durch ein Kupplungsteil 36 gebildet, das an dem Gehäuse 21 der stationären Einheit 20 angebracht wird. Das Gehäuse 52 der Verbindungseinheit 40 ist mit dem Gehäuse 21 der stationären Einheit mittels Riegelelementen 82 verriegelbar, insbesondere derart, dass zum Entriegeln eine Entriegelungseinrichtung 38 betätigt werden muss.

In dem Gehäuse 52 bzw. Gehäusekörper 50 der Verbindungseinheit 40 ist zumindest ein Teil eines Quetschventils 90 angeordnet. Mit anderen Worten ist das Quetschventil 90 in die Verbindungseinheit 40 integriert, zumindest teilintegriert. Das Quetschventil 90 umfasst einen absperrbaren, elastischen Schlauchabschnitt 92 der Pulver-Gas-Leitung 44, der in der Verbindungseinheit 40, insbesondere in dem Gehäusekörper 50 oder Gehäuse 52, angeordnet ist. Des Weiteren umfasst das Quetschventil 90 ein Quetschelement oder Steuerelement 94, das auch als Steuerzapfen bezeichnet werden kann, zum Quetschen (Zusammendrücken/Absperren) des Schlauchabschnitts 92. Das Quetschelement 94 ist vorzugsweise ebenfalls in dem Gehäuse 52 angeordnet oder ragt zumindest in dieses hinein.

Die Betätigung des Quetschelements 94 erfolgt mittels eines Druckgases, insbesondere Druckluft. Die Druckluft wird in der stationären Einheit 20 bereitgestellt und über eine nachfolgend näher beschriebene Kupplung an die Verbindungseinheit 40 übertragen.

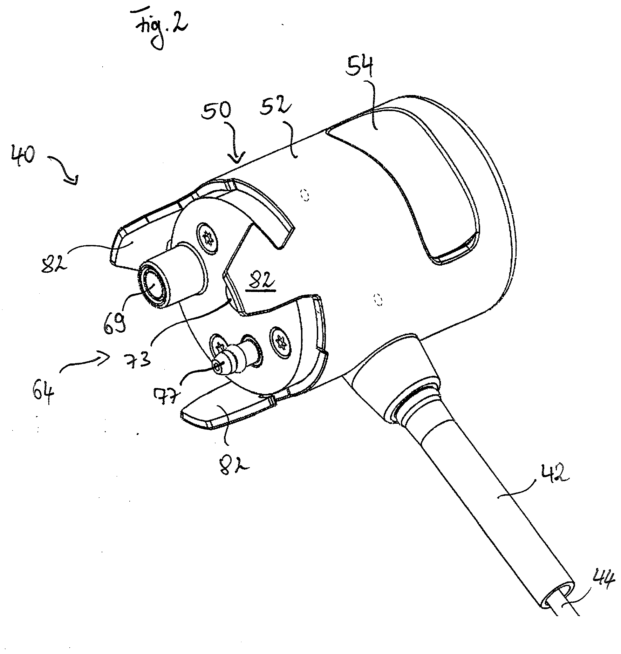

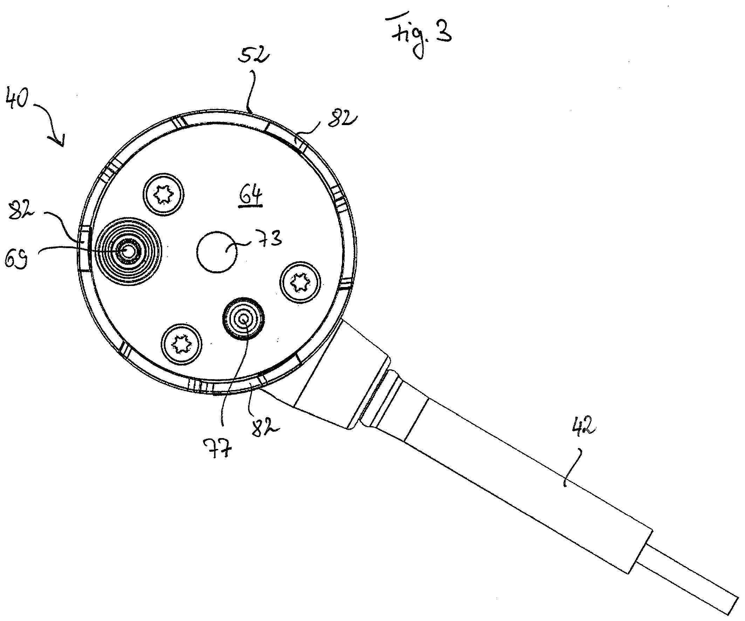

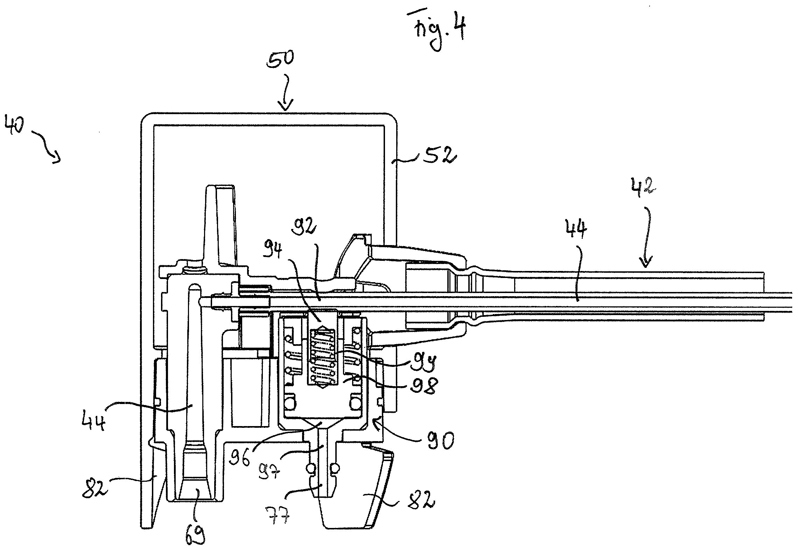

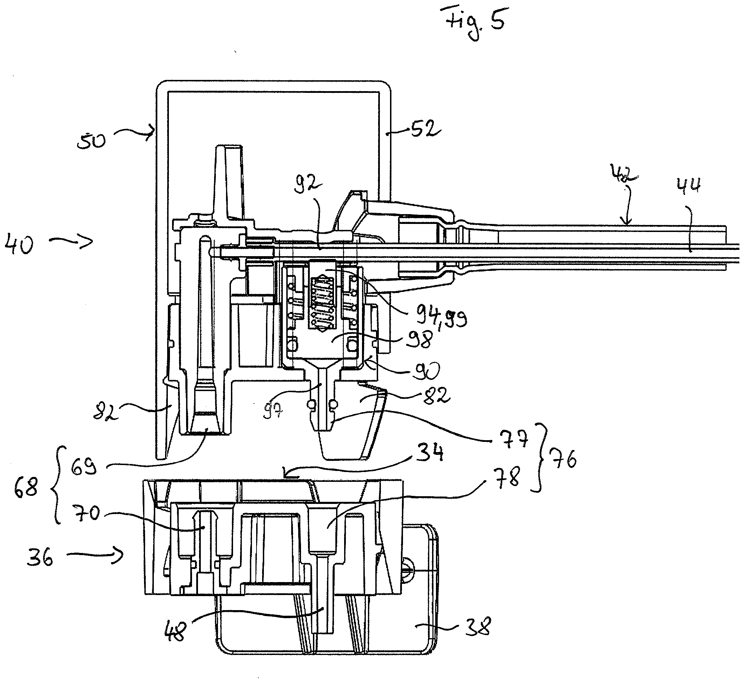

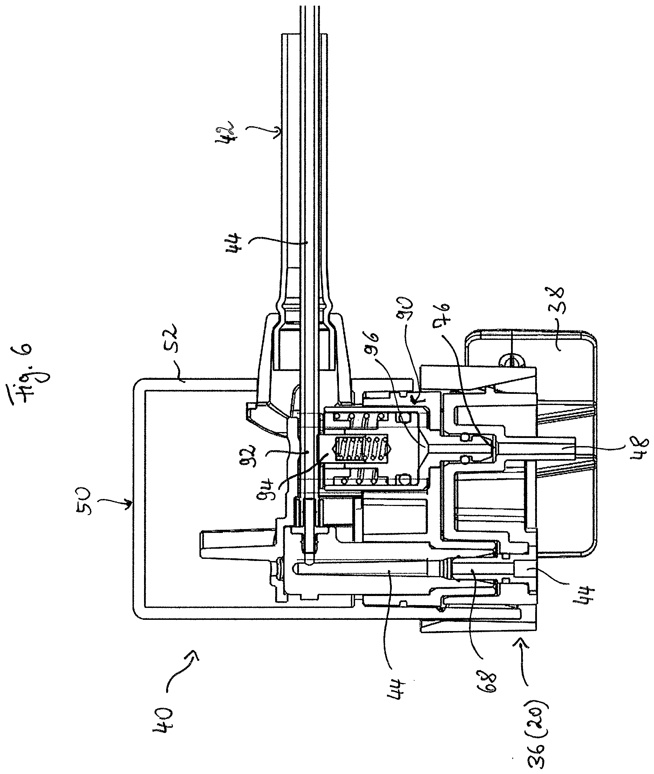

Die Verbindungseinheit 40 mit Verbindungsführung 42 und Gehäusekörper 50 wird nachfolgend mit Bezug auf die Fig. 2 bis 4 näher beschrieben. Die Fig. 5 und 6 zeigen die Kopplung der Verbindungseinheit 40 mit der stationären Einheit 20, insbesondere mit dem Kupplungsteil 36 der stationären Einheit 20. Der insbesondere zylinderförmige Gehäusekörper 50 weist erfindungsgemäß eine Stirnseite auf, an welcher der erste Kupplungsbereich 64 ausgebildet ist. Der erste Kupplungsbereich 64 umfasst erfindungsgemäß ein erstes Kupplungselement 69 zum Bilden einer Leitungskupplung 68 für die Pulver-Gas-Leitung 44. Des Weiteren umfasst der erste Kupplungsbereich 64 ein drittes Kupplungselement 73 zum Bilden einer Leitungskupplung 72 für die Flüssigkeitsleitung 46.

Darüber hinaus umfasst der erste Kupplungsbereich 64 ein fünftes Kupplungsteil 77 zum Bilden einer Steuerkupplung 76, beispielsweise einer Leitungskupplung, zum Ansteuern des Quetschventils 90 bzw. zum Betätigen oder Ansteuern des Quetschelements 94. Die Steuerkupplung 76 ist in der dargestellten Ausführungsform der Erfindung ebenfalls eine Leitungskupplung, nämlich zum Übertragen von Druckgas, insbesondere Druckluft, von der stationären Einheit 20 an die Verbindungseinheit 40.

Der zweite Anschlussbereich 34 bzw. das Kupplungsteil 36 der stationären Einheit 20 umfasst ein zweites Kupplungselement 70 zum Koppeln mit dem ersten Kupplungselement 69, ein viertes Kupplungselement 74 zum Koppeln mit dem dritten Kupplungselement 73 und ein sechstes Kupplungselement 78 zum Koppeln mit dem fünften Kupplungselement 77. Erstes und zweites Kupplungselement 69, 70 bilden insgesamt die Leitungskupplung 68 für die Pulver-Gas-Leitung 44. Drittes Kupplungselement 73 und viertes Kupplungselement 74 bilden die Leitungskupplung 72 für die Flüssigkeitsleitung 46. Fünftes und sechstes Kupplungselement 77, 78 bilden die Steuerkupplung 76. Die Steuerkupplung 76 ist vorzugsweise eine Leitungskupplung für Druckluft zur Betätigung des Quetschelements 94 des Quetschventils 90.

Das Quetschventil 90 in der Verbindungseinheit 40 weist einen Druckluftanschluss 97 zu einem Steuerraum 96 auf, der über die Steuerkupplung 76 an eine Steuerfluidleitung (Druckluftleitung) 48 in der stationären Einheit 20 angeschlossen ist. Ein erstes bewegbares Element 98 wird durch eine erste (äu-ßere) Feder in eine Freigabeposition gedrückt, in welcher der Schlauchabschnitt 92 offen ist. Durch Druckbeaufschlagung entgegen der Federkraft wird das erste bewegbare Element 98 in eine Quetsch- oder Verschlussposition gedrückt, in der der Schlauchabschnitt 92 verschlossen wird. Ein ebenfalls federbelastetes, zweites bewegbares Element 99 innerhalb des ersten bewegbaren Elements 98 verhindert, dass ein zu starker Druck auf den Schlauchabschnitt 92 ausgeübt wird.

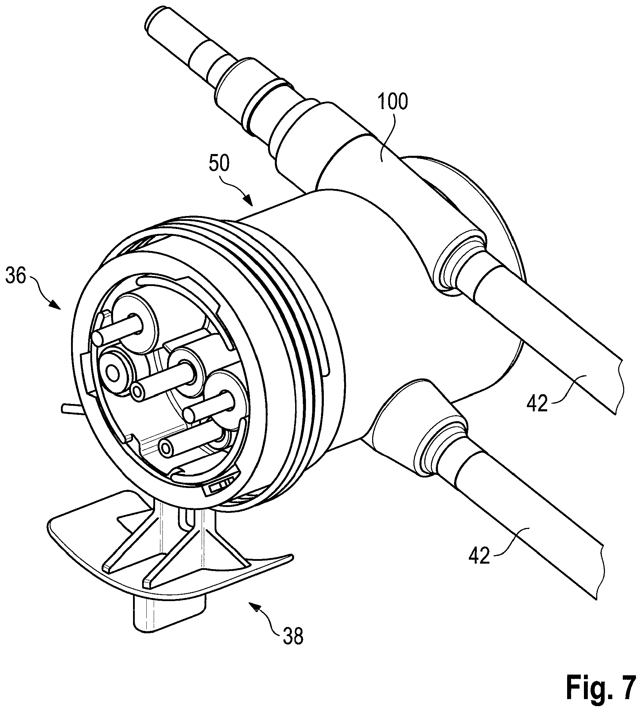

Wie insbesondere in den Fig. 2 und 7 zu sehen, umfasst das Gehäuse 52 der Verbindungseinheit 40 einen Haltebereich 54 für das Handstück 100. Der Haltebereich 54 ist als Ausnehmung in dem Gehäuse 52 gebildet und hält das Handstück 100 vorzugsweise formschlüssig.

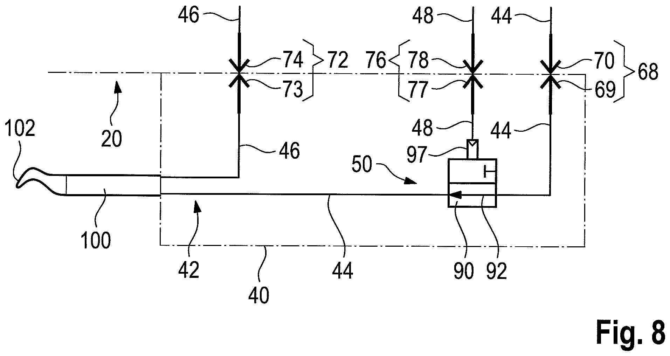

Fig. 8 veranschaulicht abstrakt das Zusammenwirken von stationärer Einheit 20, Verbindungseinheit 40 und Handstück 100. Die von der stationären Einheit 20 abkoppelbare Verbindungseinheit 40 wird über die Pulver-Gas-Leitung 44 mit einem Pulver-Gas-Gemisch, des Weiteren über die Flüssigkeitsleitung 46 mit einer Flüssigkeit versorgt. Das Pulver-Gas-Gemisch und die Flüssigkeit dienen der Behandlung des Patienten bzw. der Zahnreinigung und werden zu dem Handstück 100 geleitet. Darüber hinaus wird die abkoppelbare Verbindungseinheit 40 über die Steuerfluidleitung 48 mit einem Druckgas (Druckluft) versorgt, die zu dem Quetschventil 90 führt und zu dessen Betätigung / Aktivierung dient. An der Schnittstelle zwischen stationärer Einheit 20 und Verbindungseinheit 40 sind die bereits beschriebenen Kupplungen 68, 72 und 76 vorhanden.

## Patentansprüche

1. Pulverstrahlgerät zur Reinigung von Zahnoberflächen durch Beaufschlagung mittels eines Pulver-Gas-Gemisches, aufweisend
eine stationäre Einheit (20) mit einem Anschlussbereich für eine Mischkammer (32) zum Herstellen des Pulver-Gas-Gemisches,
ein Handstück (100) mit einer Düseneinrichtung (102) zum Strahlen des Pulver-Gas-Gemisches auf eine Zahnoberfläche und
eine Verbindungseinheit (40) zum Verbinden des Handstückes (100) mit der stationären Einheit (20),
wobei die Verbindungseinheit (40) mindestens eine Verbindungsführung (42) zwischen der stationären Einheit (20) und dem Handstück (100) aufweist, und
wobei in einer Pulver-Gas-Leitung (44) zwischen der Mischkammer (32) und der Düseneinrichtung (102) ein durch elastische Verformung absperrbarer Schlauchabschnitt (92) angeordnet ist und der absperrbare Schlauchabschnitt (92) in der Verbindungseinheit (40) angeordnet ist **dadurch gekennzeichnet,**
**dass** die Verbindungseinheit (40) lösbar mit der stationären Einheit (20) verbunden ist und einen Gehäusekörper aufweist, zum Halten und zur Aufnahme des absperrbaren, elastischen Schlauchabschnitts (92), wobei der Gehäusekörper hierzu ein starres Gehäuse umfasst, wobei zwischen der stationären Einheit (20) und der Verbindungseinheit (40) eine Verbindungszone vorgesehen ist, wobei die Verbindungszone eine Pulver-Gas-Leitung enthält,
**dass** die Verbindungseinheit (40) einen ersten Kupplungsbereich (64) zum Ankoppeln an einen korrespondierenden zweiten Kupplungsbereich (34) der stationären Einheit (20) aufweist, und
**dass** der erste Kupplungsbereich (64) an dem Gehäusekörper der Verbindungseinheit (40) vorgesehen ist, so dass der Gehäusekörper der Verbindungseinheit (40) direkt an das Gehäuse der stationären Einheit (20) anschließbar ist, wobei der Gehäusekörper eine Stirnseite aufweist, an welcher der erste Kupplungsbereich ausgebildet ist, wobei der erste Kupplungsbereich ein erstes Kupplungselement aufweist zur Bildung einer Leitungskupplung für die Pulver-Gas-Leitung.

2. Pulverstrahlgerät nach Anspruch 1,
**dadurch gekennzeichnet,**
**dass** die Verbindungseinheit (40) einen mit der Verbindungsführung (42) verbundenen Gehäusekörper (50) aufweist, in welchem der absperrbare Schlauchabschnitt (92) aufgenommen ist.

3. Pulverstrahlgerät nach einem der Ansprüche 1 oder 2,
**dadurch gekennzeichnet,**
**dass** zwischen der Verbindungseinheit (40) und der stationären Einheit (20) eine Kupplung (76) für eine Steuerfluidleitung (48) gebildet ist.

4. Pulverstrahlgerät nach einem der Ansprüche 1 bis 3,
**dadurch gekennzeichnet,**
**dass** zwischen der Verbindungseinheit (40) und der stationären Einheit (20) eine Leitungskupplung (72) für eine Flüssigkeitsleitung (46) gebildet ist.

5. Pulverstrahlgerät nach einem der Ansprüche 1 bis 4,
**dadurch gekennzeichnet,**
**dass** zwischen der Verbindungseinheit (40) und der stationären Einheit (20) eine Leitungskupplung (68) für eine Pulver-Gas-Leitung (44), oder eine Leitungskupplung für eine Druckluftleitung zur Mischkammer (32), gebildet ist.

6. Pulverstrahlgerät nach einem der Ansprüche 1 bis 5,
**dadurch gekennzeichnet,**
**dass** die Mischkammer (32) zusammen mit dem absperrbaren Schlauchabschnitt (92) eine Einheit bildet, welche auswechselbar mit der stationären Einheit (20) gekoppelt ist.

7. Pulverstrahlgerät nach einem der Ansprüche 1 bis 6,
**dadurch gekennzeichnet,**
**dass** die Verbindungseinheit (40) einen Steuerraum (96) für ein druckbeaufschlagtes Steuerfluid und/oder ein Steuerelement (94) zum Absperren des Schlauchabschnitts (92) aufweist.

8. Pulverstrahlgerät nach einem der Ansprüche 1 bis 7,
**dadurch gekennzeichnet,**
**dass** die stationäre Einheit (20) eine Steuereinrichtung, insbesondere ein steuerbares Ventil, insbesondere ein Magnetventil, zum Steuern des Steuerfluids aufweist.

9. Pulverstrahlgerät nach einem der Ansprüche 1 bis 8,
**dadurch gekennzeichnet,**
**dass** eine Entriegelungseinrichtung (38) zum gezielten Entriegeln der Verbindung zwischen der Verbindungseinheit (40) und der stationären Einheit (20) vorhanden ist.

10. Pulverstrahlgerät nach einem der Ansprüche 1 bis 9,
**dadurch gekennzeichnet,**
**dass** das Steuerelement (94) in der stationären Einheit (1) gelagert ist und zum Absperren des Schlauchabschnitts (92) in die oder an der Verbindungseinheit (40) ein- / bzw. angreift.

11. Verbindungseinheit für ein Pulverstrahlgerät (10) gemäß einem der Ansprüche 1 bis 10, **dadurch gekennzeichnet,**
**dass** die Verbindungseinheit (40) lösbar mit der stationären Einheit (20) verbindbar ist und einen Gehäusekörper aufweist, zum Halten und zur Aufnahme des absperrbaren, elastischen Schlauchabschnitts (92), wobei der Gehäusekörper hierzu ein starres Gehäuse umfasst, wobei zwischen der stationären Einheit (20) und der Verbindungseinheit (40) eine Verbindungszone vorgesehen ist, wobei die Verbindungszone eine Pulver-Gas-Leitung enthält, dass die Verbindungseinheit (40) einen ersten Kupplungsbereich (64) zum Ankoppeln an einen korrespondierenden zweiten Kupplungsbereich (34) der stationären Einheit (20) aufweist, und dass der erste Kupplungsbereich (64) an dem Gehäusekörper der Verbindungseinheit (40) vorgesehen ist, so dass der Gehäusekörper der Verbindungseinheit (40) direkt an das Gehäuse der stationären Einheit (20) anschließbar ist, wobei der Gehäusekörper eine Stirnseite aufweist, an welcher der erste Kupplungsbereich ausgebildet ist, wobei der erste Kupplungsbereich ein erstes Kupplungselement aufweist zur Bildung einer Leitungskupplung für die Pulver-Gas-Leitung.

## Claims

1. A powder blasting device for cleaning tooth surfaces by exposure to a powder-gas compound, comprising
a stationary unit (20) with a connection area for a mixing chamber (32) for forming the powder-gas compound
a handpiece (100) with a nozzle element (102) for blasting the powder-gas mixture onto a tooth surface, and
a connection unit (40) for connecting the handpiece (100) to the stationary unit (20),
wherein the connection unit (40) comprises at least one connection guide (42) between the stationary unit (20) and the handpiece (100), and
wherein a tube section (92) which can be shut off by elastic deformation is arranged in a powder-gas line (44) between the mixing chamber (32) and the nozzle element (102), and the tube section (92) which can be shut off is arranged in the connection unit (40)
**characterized in that**
the connection unit (40) is detachably connected to the stationary unit (20) and comprises a housing for holding and receiving the elastic tube section (92) which can be shut-off, the housing comprising a rigid housing for this purpose, a connection region being provided between the stationary unit (20) and the connection unit (40), the concounection region containing a powder-gas line,
**in that** the connection unit (40) comprises a first coupling area (64) for coupling to a corresponding second coupling area (34) of the stationary unit (20), and
**in that** the first coupling area (64) is provided on the housing of the connection unit (40), so that the housing of the connection unit (40) can be connected directly to the housing of the stationary unit (20), the housing comprising an front side on which the first coupling area is formed, the first coupling area comprising a first coupling element for forming a coupling line for the powder-gas line.

2. The powder blasting device according to claim 1,
**characterized in that**
**in that** the connection unit (40) comprises a housing (50) which is connected to the connection guide (42) and in which the tube section (92) which can be shut off is accommodated.

3. The powder blasting device according to one of claims 1 or 2,
**characterized in that**
a coupling (76) for a control fluid line (48) is formed between the connection unit (40) and the stationary unit (20).

4. The powder blasting device according to any one of claims 1 to 3,
**characterized in that**
a line coupling (72) for a fluid line (46) is formed between the connection unit (40) and the stationary unit (20).

5. The powder blasting device according to any one of claims 1 to 4,
**characterized in that**
a line coupling (68) for a powder-gas line (44), or a line coupling for a pressurized air line to the mixing chamber (32), is formed between the connection unit (40) and the stationary unit (20).

6. The powder blasting device according to any one of claims 1 to 5,
**characterized in that**
the mixing chamber (32) together with the tube section (92) which can be shut-off forms a unit which is interchangeably coupled to the stationary unit (20).

7. The powder blasting device according to any one of claims 1 to 6,
**characterized in that**
the connection unit (40) comprises a control chamber (96) for a pressurized control fluid and/or a control element (94) for shutting off the tube section (92).

8. The powder blasting device according to any one of claims 1 to 7,
**characterized in that**
the stationary unit (20) comprises a control device, in particular a controllable valve, in particular a solenoid valve, for controlling the control fluid.

9. The powder blasting device according to any one of claims 1 to 8,
**characterized in that**
an unlocking device (38) is provided for selectively unlocking of the connection between the connection unit (40) and the stationary unit (20).

10. The powder blasting device according to any one of claims 1 to 9,
**characterized in that**
the control element (94) is positioned in the stationary unit (1) and engages in or on the connection unit (40) for shutting off the tube section (92).

11. Connection unit for a powder blasting device (10) according to any one of claims 1 to 10, **characterized in that**
the connection unit (40) can be detachably connected to the stationary unit (20) and comprises a housing for holding and receiving the elastic tube section (92) which can be shut-off, the housing comprising a rigid housing for this purpose, **in that** the connection unit (40) comprises a first coupling area (64) for coupling to a corresponding second coupling area (34) of the stationary unit (20), and
**in that** the first coupling area (64) is provided on the housing of the connection unit (40), so that the housing of the connection unit (40) can be attached directly to the housing of the stationary unit (20).

## Revendications

1. Appareil à jet de poudre pour le nettoyage de surfaces dentaires par exposition à un mélange de poudre-gaz, comprenant
une unité stationnaire (20) ayant une zone de raccordement pour une chambre de mélange (32) destinée à préparer le mélange de poudre-gaz,
une pièce à main (100) ayant un dispositif de buse (102) destiné à projeter le mélange de poudre-gaz sur une surface dentaire, et
une unité de liaison (40) pour relier la pièce à main (100) à l'unité stationnaire (20),
dans lequel
l'unité de liaison (40) présente au moins un guide de liaison (42) entre l'unité stationnaire (20) et la pièce à main (100), et
un tronçon de tuyau flexible (92) obturable par déformation élastique est disposé dans une conduite de poudre-gaz (44) entre la chambre de mélange (32) et le dispositif de buse (102), et le tronçon de tuyau flexible (92) obturable est disposé dans l'unité de liaison (40),
**caractérisé en ce que**
l'unité de liaison (40) est reliée de manière amovible à l'unité stationnaire (20) et comprend un corps de boîtier (50) destiné à retenir et à recevoir le tronçon de tuyau flexible (92) élastique obturable, le corps de boîtier comprenant à cet effet un boîtier rigide, une zone de liaison étant prévue entre l'unité stationnaire (20) et l'unité de liaison (40), la zone de liaison comprenant une conduite de poudre-gaz,
**en ce que** l'unité de liaison (40) présente une première zone d'accouplement (64) destinée à être accouplée à une deuxième zone d'accouplement (34) correspondante de l'unité stationnaire (20), et
**en ce que** la première zone d'accouplement (64) est prévue sur le corps de boîtier de l'unité de liaison (40), de sorte que le corps de boîtier de l'unité de liaison (40) peut être raccordé directement au boîtier de l'unité stationnaire (20), le corps de boîtier présentant une face frontale sur laquelle est formée la première zone d'accouplement, la première zone d'accouplement comprenant un premier élément d'accouplement pour réaliser un accouplement pour la conduite de poudre-gaz.

2. Appareil à jet de poudre selon la revendication 1,
**caractérisé en ce que**
l'unité de liaison (40) présente un corps de boîtier (50) relié au guide de liaison (42), dans lequel est logé le tronçon de tuyau flexible (92) obturable.

3. Appareil à jet de poudre selon la revendication 1 ou 2,
**caractérisé en ce que**
un accouplement (76) pour une conduite de fluide de commande (48) est formé entre l'unité de liaison (40) et l'unité stationnaire (20).

4. Appareil à jet de poudre selon l'une des revendications 1 à 3,
**caractérisé en ce que**
un accouplement de conduite (72) pour une conduite de liquide (46) est formé entre l'unité de liaison (40) et l'unité stationnaire (20).

5. Appareil à jet de poudre selon l'une des revendications 1 à 4,
**caractérisé en ce que**
un accouplement de conduite (68) pour une conduite de poudre-gaz (44) ou un accouplement de conduite pour une conduite d'air comprimé vers la chambre de mélange (32) est formé entre l'unité de liaison (40) et l'unité stationnaire (20).

6. Appareil à jet de poudre selon l'une des revendications 1 à 5,
**caractérisé en ce que**
la chambre de mélange (32) forme, conjointement avec le tronçon de tuyau flexible (92) obturable, une unité qui est accouplée de manière interchangeable à l'unité stationnaire (20).

7. Appareil à jet de poudre selon l'une des revendications 1 à 6,
**caractérisé en ce que**
l'unité de liaison (40) comprend un espace de commande (96) pour un fluide de commande sous pression et/ou un élément de commande (94) pour obturer le tronçon de tuyau flexible (92).

8. Appareil à jet de poudre selon l'une des revendications 1 à 7,
**caractérisé en ce que**
l'unité stationnaire (20) comprend un dispositif de commande, en particulier une vanne commandable, en particulier une électrovanne, pour commander le fluide de commande.

9. Appareil à jet de poudre selon l'une des revendications 1 à 8,
**caractérisé en ce que**
il est prévu un dispositif de déverrouillage (38) pour déverrouiller de manière ciblée la liaison entre l'unité de liaison (40) et l'unité stationnaire (20).

10. Appareil à jet de poudre selon l'une des revendications 1 à 9,
**caractérisé en ce que**
l'élément de commande (94) est monté dans l'unité stationnaire (1) et agit ou s'engage sur ou dans l'unité de liaison (40) pour obturer le tronçon de tuyau flexible (92).

11. Unité de liaison pour un appareil à jet de poudre (10) selon l'une des revendications 1 à 10,
**caractérisée en ce que**
l'unité de liaison (40) est reliée de manière amovible à l'unité stationnaire (20) et comprend un corps de boîtier destiné à retenir et à recevoir le tronçon de tuyau flexible (92) élastique obturable, le corps de boîtier comprenant à cet effet un boîtier rigide, une zone de liaison étant prévue entre l'unité stationnaire (20) et l'unité de liaison (40), la zone de liaison comprenant une conduite de poudre-gaz,
**en ce que** l'unité de liaison (40) présente une première zone d'accouplement (64) destinée à être accouplée à une deuxième zone d'accouplement (34) correspondante de l'unité stationnaire (20), et
**en ce que** la première zone d'accouplement (64) est prévue sur le corps de boîtier de l'unité de liaison (40), de sorte que le corps de boîtier de l'unité de liaison (40) peut être raccordé directement au boîtier de l'unité stationnaire (20), le corps de boîtier présentant une face frontale sur laquelle est formée la première zone d'accouplement, la première zone d'accouplement comprenant un premier élément d'accouplement pour réaliser un accouplement pour la conduite de poudre-gaz.
